# EUROPÄISCHE PATENTANMELDUNG

(11) **EP 1 667 185 A2**
(43) Veröffentlichungstag der Anmeldung: **07.06.2006**
(21) Anmeldenummer: 05024591.9
(22) Anmeldetag: 10.11.2005
(51) Int. Cl.: H01H 13/83

(54) **Eingabevorrichtung**

(30) Priorität: 15.11.2004 DE 102004055085
(71) Anmelder: Osram Opto Semiconductors GmbH, 93049 Regensburg (DE)
(72) Erfinder: Hüttner, Josef, 93049 Regensburg (DE)
(74) Vertreter: Epping, Wilhelm

(57) **Zusammenfassung**

Es wird eine Eingabevorrichtung beschrieben mit einem ersten Zeichen einer ersten Farbe, einem zweiten Zeichen einer zweiten Farbe und einer Beleuchtungsvorrichtung, die Licht der ersten Farbe und/oder der zweiten Farbe erzeugt, derart, dass je nach Beleuchtung der Eingabevorrichtung in einem ersten Betriebszustand nur das erste Zeichen der ersten Farbe, in einem zweiten Betriebszustand nur das zweite Zeichen der zweiten Farbe oder in einem dritten Betriebszustand beide Zeichen hervortreten.

## Beschreibung

Die Erfindung betrifft eine Eingabevorrichtung. Dabei kann die Eingabevorrichtung beispielsweise eine Tastatur sein, die mindestens eine Taste aufweist.

Aus der Offenlegungsschrift DE 102 45 629 A1 ist ein elektronisches Gerät bekannt, bei welchem druckempfindliche Tasten über LEDs einer vorgegebenen Farbe beleuchtet sind.

Bei manchen Anwendungen kann es erwünscht sein die Anzeige von Zeichen einer Eingabevorrichtung kontextbezogen zu ändern (kontextbezogene Zeichenanzeige). Bei einem Mobiltelefon ist es zum Beispiel vorteilhaft, wenn zur Eingabe einer Rufnummer auf der Tastatur nur Ziffern und zur Eingabe eines Textes, etwa einer SMS, nur Buchstaben angezeigt werden.

Bei herkömmlichen Eingabevorrichtungen, beispielsweise Touchscreens, wird eine kontextbezogene Zeichenanzeige dadurch realisiert, dass für verschiedene Kontexte verschiedene Tastaturen eingeblendet werden.

Es ist Aufgabe der vorliegenden Erfindung, eine einzige Eingabevorrichtung mit einer kontextbezogenen Zeichenanzeige anzugeben.

Diese Aufgabe wird durch eine Eingabevorrichtung mit den Merkmalen des Patentanspruchs 1 gelöst. Weitere vorteilhafte Ausgestaltungen sind Gegenstand der abhängigen Ansprüche.

Bei der vorliegenden Erfindung weist die Eingabevorrichtung ein erstes Zeichen einer ersten Farbe, ein zweites Zeichen einer zweiten Farbe und eine Beleuchtungsvorrichtung auf, die Licht der ersten Farbe und/oder der zweiten Farbe erzeugt, derart, dass je nach Beleuchtung der Eingabevorrichtung in einem ersten Betriebszustand nur das erste Zeichen der ersten Farbe und in einem zweiten Betriebszustand nur das zweite Zeichen der zweiten Farbe.

Im Rahmen der Erfindung ist unter einem Zeichen ein Symbol jeglicher Form und Gestalt zu verstehen, das beispielsweise auf einem Medium als Beschriftung aufgebracht sein kann oder in dem Medium als Bestandteil enthalten sein kann.

Vorzugsweise ist die Eingabevorrichtung eine Tastatur, beispielsweise die Tastatur eines Mobiltelefons, und weist mehrere Tasten auf. Besonders bevorzugt ist jede der Tasten mit mindestens zwei verschiedenen Zeichen versehen, wodurch sich die Gesamtgröße der Eingabevorrichtung vorteilhaft klein gestalten lässt. Denn dadurch muss nicht für jedes einzelne Zeichen eine Taste vorgesehen werden. Eine geringe Gesamtgröße der Eingabevorrichtung ist beispielsweise bei einem Mobiltelefon erwünscht, das besonders handlich, also klein und leicht, sein soll.

Weiterhin spielt bei einer solchen Eingabevorrichtung die Bedienungsfreundlichkeit eine wichtige Rolle. Insbesondere kann die Deutlichkeit der Zeichenanzeige bei einer Eingabevorrichtung für ein Gerät eine bedeutende Erleichterung bei der Bedienung des Gerätes darstellen.

Erfindungsgemäß wird die Deutlichkeit der Zeichenanzeige dadurch unterstützt, dass sich die beiden Zeichen der Taste farblich voneinander unterscheiden. Für einen Benutzer ist der farbliche Unterschied zwischen den beiden Zeichen zur deutlichen Erkennung der beiden unterschiedlichen Zeichen beziehungsweise zur Unterscheidung der beiden Zeichen, vor allem dann, wenn den beiden Zeichen zwei verschiedene Bedienungsfunktionen zugeordnet sind, hilfreich. Beispielsweise kann bei einem Mobiltelefon das erste Zeichen eine Ziffer einer ersten Farbe und das zweite Zeichen ein Buchstabe einer zweiten Farbe sein (kontextbezogene Zeichenanzeige).

Vorzugsweise wird bei einer Anzeige des ersten Zeichens das Gerät in einen ersten Betriebszustand versetzt, wobei für den Benutzer nur das erste Zeichen erkennbar ist. Entsprechend wird das Gerät bei einer Anzeige des zweiten Zeichens in einen zweiten Betriebszustand versetzt, wobei für den Benutzer nur das zweite Zeichen erkennbar ist.

In einem dritten Betriebszustand sind beide Zeichen sichtbar. Vorteilhafterweise ist für die Sichtbarkeit der beiden Zeichen im dritten Betriebszustand eine ambiente Beleuchtung ausreichend. Weiterhin kann die Eingabevorrichtung mit von der Beleuchtungseinrichtung erzeugtem mischfarbigem Licht beleuchtet sein. Vorzugsweise ist die Eingabevorrichtung beziehungsweise die Taste mit weißem Licht beleuchtet.

Bei einer ersten Ausführungsform gemäß der Erfindung weist die Eingabevorrichtung mindestens eine Taste auf, wobei das Material der Taste für Licht der ersten und zweiten Farbe durchlässig ist. Auf die Taste sind dabei ein erstes Zeichen der ersten Farbe und ein zweites Zeichen der zweiten Farbe aufgebracht, beispielsweise aufgedruckt.

Wird die Taste im ersten Betriebszustand durch die Beleuchtungseinrichtung mit Licht der zweiten Farbe beleuchtet, so wird das zweite Zeichen der zweiten Farbe in einen Farbhintergrund eingebettet, von dem es sich farblich nicht abhebt. Es wird also durch die Einbettung in einem farblich entsprechenden Hintergrund verborgen. Diese Einbettung wird auch als so genannter Camouflage-Effekt bezeichnet. Das erste Zeichen hingegen, das eine erste Farbe aufweist, hebt sich farblich vom Hintergrund ab und tritt daher für den Benutzer erkennbar hervor. Umgekehrt tritt im zweiten Betriebszustand das zweite Zeichen für den Benutzer erkennbar hervor, wenn die Eingabevorrichtung mit Licht der ersten Farbe beleuchtet wird. Denn dann wird das erste Zeichen der ersten Farbe in den farblich entsprechenden Hintergrund eingebettet. Bei Umgebungslicht oder der Beleuchtung mit mischfarbigem, vorzugsweise weißem Licht treten im dritten Betriebszustand beide Zeichen für den Benutzer erkennbar hervor.

Im Rahmen der Erfindung ist unter einer farblichen Entsprechung zwischen der Farbe des Zeichens und des Hintergrunds nicht nur eine exakte Gleichheit der Wellenlängen beziehungsweise spektralen Verteilungen zu verstehen, sondern auch ein gleicher beziehungsweise ähnlicher Farbeindruck, der beim Benutzer entsteht.

Bei einer zweiten Ausführungsform gemäß der Erfindung weist die Eingabevorrichtung mindestens eine Taste auf, die ein lichtundurchlässiges Material enthält. Vorzugsweise ist das Material für Licht der ersten und der zweiten Farbe undurchlässig. Besonders bevorzugt umfasst die Taste ein für Licht der ersten Farbe durchlässiges erstes Zeichen und ein für Licht der zweiten Farbe durchlässiges zweites Zeichen. Wenn die Taste im ersten Betriebszustand durch die Beleuchtungsvorrichtung mit Licht der ersten Farbe beleuchtet wird, ist für den Benutzer das erste Zeichen deutlich erkennbar, während das zweite Zeichen dunkel bleibt und zurücktritt. Entsprechend ist für den Benutzer im zweiten Betriebszustand bei einer Beleuchtung der Taste mit Licht der zweiten Farbe das zweite Zeichen deutlich erkennbar, während das erste Zeichen dunkel bleibt und zurücktritt. Die Taste selbst bleibt farblich unverändert.

Das erste Zeichen enthält ein Material, das für Licht der ersten Farbe durchlässig ist, während es Licht der zweiten Farbe ausfiltert. Entsprechendes gilt für das zweite Zeichen, das ein Material enthält, das Licht der ersten Farbe ausfiltert. Bei Umgebungslicht oder der Beleuchtung mit mischfarbigem, vorzugsweise weißem Licht sind im dritten Betriebszustand beide Zeichen für den Benutzer deutlich erkennbar.

Vorteilhafterweise entspricht die erste Farbe des von der Beleuchtungsvorrichtung erzeugten Lichts der ersten Farbe des ersten Zeichens und die zweite Farbe des von der Beleuchtungsvorrichtung erzeugten Lichts der zweiten Farbe des zweiten Zeichens. Denkbar ist jedoch auch ein Unterschied zwischen der Farbe der Beleuchtung und des Zeichens, der allerdings nur so groß sein sollte, dass dennoch beim Benutzer ein deutlich und ohne Weiteres erkennbarer Unterschied zwischen dem ersten und dem zweiten Zeichen entstehen kann.

Bei einer Eingabevorrichtung für ein Gerät wird als Zeichen vorzugsweise ein alphanumerisches Symbol oder eine alphanumerische Symbolfolge verwendet. Ferner sind Symbole mit einem funktionellen Hinweis denkbar wie beispielsweise das Symbol eines Telefonhörers bei einem Mobiltelefon. Vorteilhafterweise können unterschiedliche Symbole beziehungsweise Symbolfolgen erfindungsgemäß durch unterschiedliche Farben kenntlich gemacht werden. Besonders vorteilhafterweise ist eine Taste der Eingabevorrichtung mit einer Ziffer der ersten Farbe und einem Buchstaben der zweiten Farbe versehen (kontextbezogene Zeichenanzeige), wodurch dem Benutzer der Umgang mit dem Gerät und dessen verschiedenen Funktionen erleichtert wird.

Die Eingabevorrichtung weist zur Beleuchtung eine Beleuchtungsvorrichtung auf. Die Beleuchtungsvorrichtung kann zwischen einer Oberseite und einer Unterseite des Geräts montiert sein, wobei die Eingabevorrichtung auf der Oberseite derart angeordnet ist, dass sie von dem von der Beleuchtungsvorrichtung emittierten Licht beleuchtet werden kann. Das Licht kann dabei aus der Beleuchtungsvorrichtung in die Taste lateral und/oder vertikal eingekoppelt werden.

Bei einer bevorzugten Ausführungsform weist das Gerät eine gemeinsame Beleuchtungsvorrichtung für alle Tasten auf, wobei das erzeugte Licht durch einen Lichtleiter zu den einzelnen Tasten der Tastatur geführt wird. Diese Anordnung mit nur einer Beleuchtungsvorrichtung ist kostengünstig und wirkt sich außerdem auf die Gesamtgröße des elektronischen Geräts positiv aus, da kein Platz für weitere Beleuchtungsvorrichtungen vorgesehen werden muss.

Vorzugsweise weist die Beleuchtungsvorrichtung ein strahlungsemittierendes Halbleiterbauelement, beispielsweise eine Leuchtdiode, auf. Zur Erzeugung von mindestens zweifarbigem Licht kann die Beleuchtungsvorrichtung mindestens zwei Bauelemente aufweisen, die Licht zweier verschiedener Wellenlängen erzeugen. Alternativ kann die Beleuchtungsvorrichtung mindestens ein Bauelement aufweisen, das mindestens zwei Halbleiterchips umfasst, die Licht zweier unterschiedlicher Wellenlängen erzeugen. Letztere Alternative bietet den Vorteil einer einfacheren Herstellung, da für eine Beleuchtungsvorrichtung, die verschiedenfarbiges Licht erzeugt, lediglich eine Leuchtdiode vorzusehen ist. Ferner kann das Bauelement zur Erzeugung von mehrfarbigem Licht einen Halbleiterchip aufweisen, dem zur Wellenlängenkonversion der erzeugten Strahlung ein Konversionselement, vorzugsweise ein Verguss, in Abstrahlrichtung nachgeordnet ist.

Bei einem Gerät mit einer erfindungsgemäßen Eingabevorrichtung wird vorzugsweise automatisch der vom Benutzer gewünschte Betriebszustand aktiviert. Beispielsweise können dann bei einem Mobiltelefon die Buchstaben aufleuchten, wenn der Benutzer die Funktion "Mitteilung schreiben" aufruft. Alternativ kann der Benutzer den gewünschten Betriebszustand manuell einstellen.

Eine erfindungsgemäße Eingabevorrichtung kann vorzugsweise für ein mobiles elektronisches Gerät, beispielsweise für ein Mobiltelefon, ein Notebook, ein PDA oder einen MP3-Player verwendet werden.

Im Rahmen der Erfindung ist für die kontextbezogene Zeichenanzeige vorzugsweise eine farbliche Unterscheidung von Zeichen vorgesehen. Es sind jedoch auch andere Möglichkeiten der Unterscheidung von Zeichen denkbar, bei denen der beschriebene Camouflage-Effekt zum Tragen kommt, beispielsweise bei der Verwendung unterschiedlicher Texturen.

Weitere Merkmale, Vorteile und Weiterbildungen der Erfindung ergeben sich aus den nachfolgend in Verbindung mit den Figuren 1 bis 7 erläuterten Ausführungsbeispielen.

Es zeigen:
- Figur 1: eine schematische Darstellung einer Taste einer Eingabevorrichtung im ersten Betriebszustand entsprechend einem ersten Ausführungsbeispiel der Erfindung,
- Figur 2: eine schematische Darstellung der in Figur 1 dargestellten Taste im zweiten Betriebszustand,
- Figur 3: eine schematische Darstellung der in Figur 1 dargestellten Taste im dritten Betriebszustand,
- Figur 4: eine schematische Darstellung einer Taste einer Eingabevorrichtung im ersten Betriebszustand entsprechend einem zweiten Ausführungsbeispiel der Erfindung,
- Figur 5: eine schematische Darstellung der in Figur 4 dargestellten Taste im zweiten Betriebszustand,
- Figur 6: eine schematische Darstellung der in Figur 4 dargestellten Taste im dritten Betriebszustand,
- Figuren 7a, b, c: eine schematische Aufsicht eines Mobiltelefons mit einem dritten Ausführungsbeispiel einer erfindungsgemäßen Eingabevorrichtung.

In den Ausführungsbeispielen und Figuren sind gleiche oder gleich wirkende Bestandteile jeweils mit den gleichen Bezugszeichen versehen.

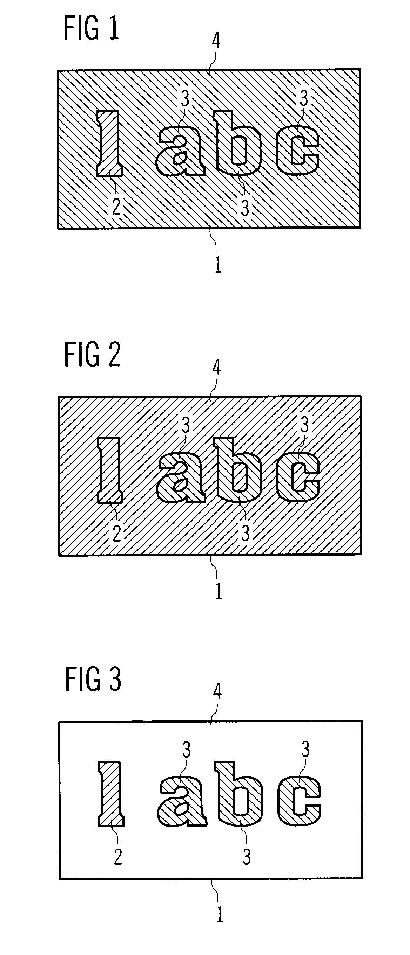

In den Figuren 1 bis 3 und 4 bis 6 ist eine Taste 1 einer Eingabevorrichtung in drei verschiedenen Betriebszuständen dargestellt. Die Taste 1 weist ein erstes Zeichen 2, das beispielsweise wie dargestellt eine Ziffer "1" ist, und ein zweites Zeichen 3 auf, wobei das Zeichen 3 eine Symbolfolge, beispielsweise wie dargestellt aus den drei Buchstaben "abc", ist. Die Zeichen 2 und 3 können beispielsweise auf den Tastenkörper 4 direkt aufgebracht, zum Beispiel aufgedruckt sein, oder in den Tastenkörper 4 als eigene Bestandteile eingebracht, beispielsweise eingelegt, sein. Ferner können der Tastenkörper 4 und die Zeichen 2 und 3 mit einem Schutzkörper versehen sein, der insbesondere die Zeichen 2 und 3 vor einem mechanischen Abrieb oder sonstigen Beschädigungen, die die Erkennbarkeit der Zeichen deutlich beeinträchtigen, schützt. Beispielsweise kann der Schutzkörper in Form eines transparenten Vergusses den Tastenkörper 4 und die Zeichen 2 und 3 überziehen. Die Taste 1 umfasst die Zeichen 2 und 3, einen Tastenkörper 4 und eventuell einen Schutzkörper. Die Taste 1 kann ein Bestandteil einer Tastatur sein, wie sie beispielsweise bei Mobiltelefonen verwendet wird.

In Figur 1 ist der erste Betriebszustand der Taste 1 gemäß einem ersten Ausführungsbeispiel der Erfindung schematisch dargestellt. Dabei weist das Zeichen 2 eine erste Farbe auf, was durch eine nach rechts geneigte Linienschraffur dargestellt ist. Das Zeichen 3 weist eine zweite Farbe auf, was durch eine nach links geneigte Linienschraffur dargestellt ist.

Durch die Einbettung in einen Hintergrund mit der zweiten Farbe, was entsprechend durch eine nach links geneigte Linienschraffur dargestellt ist, ist das Zeichen 3 verborgen ("Camouflage"). Der Hintergrund wird dabei vom Tastenkörper 4 gebildet.

Beispielsweise kann die erste Farbe des Zeichens 2 der Farbe "rot" und die zweite Farbe des Zeichens 3 der Farbe "blau" entsprechen. Wird nun der für Licht der ersten und zweiten Farbe durchlässige Tastenkörper mit blauem Licht beleuchtet, wird das blaue Zeichen 3 in einen farblich entsprechenden Hintergrund eingebettet und tritt somit für den Benutzer zurück, so dass es als eigenständiges Zeichen nicht mehr erkennbar ist. Das rote Zeichen 2 hingegen hebt sich vom blauen Hintergrund für den Benutzer deutlich erkennbar ab.

In Figur 2 ist der zweite Betriebszustand schematisch dargestellt. Im Gegensatz zum ersten Betriebszustand wird der Tastenkörper 4 nun mit Licht der ersten Farbe, beispielsweise rot, beleuchtet. Dadurch wird das Zeichen 2 verborgen und das Zeichen 3 tritt für den Benutzer deutlich erkennbar hervor.

Der erste und der zweite Betriebszustand können beispielsweise durch eine Beleuchtungsvorrichtung realisiert werden, die ein strahlungsemittierendes Bauelement vorzugsweise mit zwei Halbleiterchips aufweist, von denen der eine Licht einer ersten Farbe und der andere Licht einer zweiten Farbe emittiert.

In Figur 3 ist der dritte Betriebszustand schematisch dargestellt. Im dritten Betriebszustand treten beide Zeichen für den Benutzer deutlich erkennbar hervor. Dieser Betriebszustand kann bei Beleuchtung mit Umgebungslicht und/oder durch von der Beleuchtungsvorrichtung erzeugtes mischfarbiges beziehungsweise weißes Licht realisiert werden.

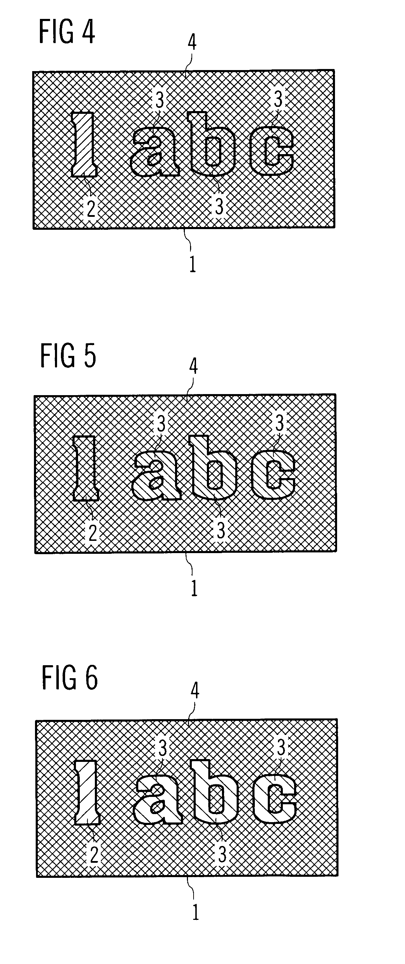

In Figur 4 ist der erste Betriebszustand der Taste 1 gemäß einem zweiten Ausführungsbeispiel der Erfindung schematisch dargestellt. Dabei ist das Zeichen 2 für Licht einer ersten Farbe durchlässig, was durch eine nach rechts geneigte Linienschraffur dargestellt ist. Das Zeichen 3 ist für Licht einer zweiten Farbe durchlässig, was durch eine nach links geneigte Linienschraffur dargestellt ist. Ferner ist das Zeichen 2 für Licht der zweiten Farbe undurchlässig, während das Zeichen 3 für Licht der ersten Farbe undurchlässig ist. Der Tastenkörper 4 ist für Licht der ersten und zweiten Farbe undurchlässig, was durch eine netzartige Textur dargestellt ist.

Beispielsweise kann die erste Farbe des Zeichens 2 der Farbe "rot" und die zweite Farbe des Zeichens 3 der Farbe "blau" entsprechen. Entsprechend symbolisiert die netzartige Textur des Tastenkörpers die Undurchlässigkeit des Tastenkörpers 4 für rotes und blaues Licht.

Wird nun der für Licht der ersten und zweiten Farbe undurchlässige Tastenkörper 4 mit Licht der ersten Farbe, beispielsweise rot, beleuchtet, wie in Figur 4 dargestellt, blockt sowohl der Tastenkörper 4 als auch das für Licht der ersten Farbe undurchlässige Zeichen 3 das Licht. Das Zeichen 3 tritt somit zurück und ist für den Betrachter nicht mehr deutlich erkennbar. Das Zeichen 2 hingegen ist für Licht der ersten Farbe durchlässig und ist somit für den Benutzer deutlich erkennbar.

In Figur 5 ist der zweite Betriebszustand schematisch dargestellt. Im Gegensatz zum ersten Betriebszustand wird der Tastenkörper 4 nun mit Licht der zweiten Farbe, beispielsweise blau, beleuchtet. Während das Zeichen 2 das Licht der zweiten Farbe blockt, lässt das Zeichen 3 das Licht der zweiten Farbe durch und tritt somit für den Benutzer deutlich erkennbar hervor.

Der erste und der zweite Betriebszustand können beispielsweise durch eine Beleuchtungsvorrichtung realisiert werden, die ein strahlungsemittierendes Bauelement mit zwei Halbleiterchips aufweist, von denen der eine Licht der ersten Farbe und der andere Licht der zweiten Farbe emittiert.

In Figur 6 ist der dritte Betriebszustand schematisch dargestellt, wobei beide Zeichen für den Benutzer deutlich erkennbar hervortreten. Dieser Betriebszustand kann bei Beleuchtung mit Umgebungslicht und/oder durch von der Beleuchtungsvorrichtung erzeugtes mischfarbiges beziehungsweise weißes Licht realisiert werden.

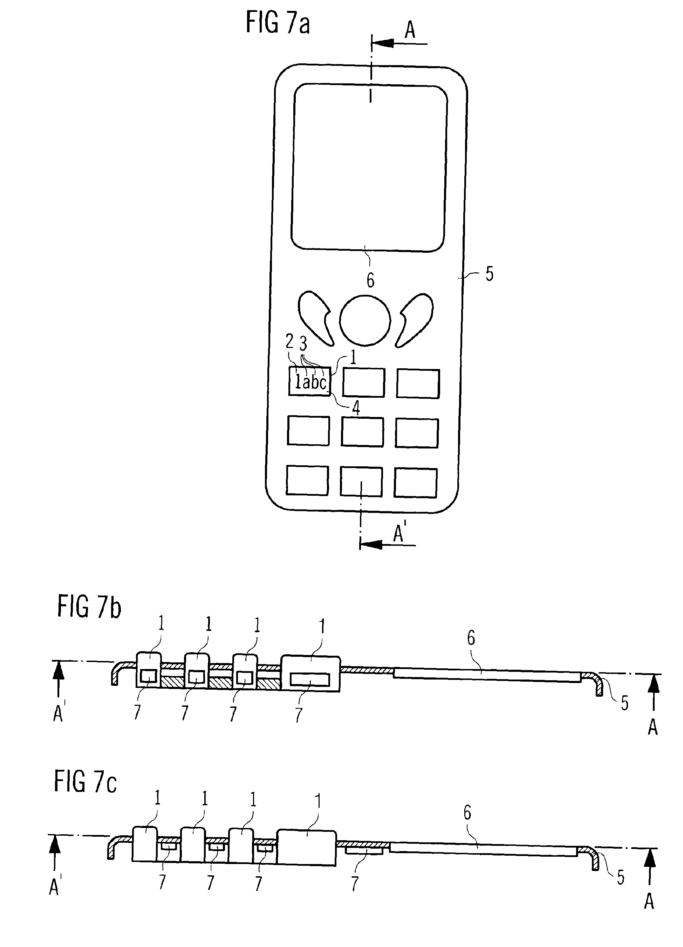

In Figuren 7a, b, c ist ein Mobiltelefon schematisch dargestellt. Es weist ein Gehäuseoberteil 5 und ein Display 6 auf. Die Taste 1 weist eine kontextbezogene Zeichenanzeige gemäß der Erfindung auf. Bei dem dargestellten Mobiltelefon ist eine Beleuchtungsvorrichtung 7 in die Taste 1 integriert (Figur 7b). Somit wird die Taste 1 relativ zum Gehäuseoberteil 5 in vertikaler Richtung beleuchtet. Alternativ kann die Taste 1 seitlich beleuchtet werden (Figur 7c).

Vorteilhafterweise werden bei der Erfindung keine teuren Komponenten wie zum Beispiel LCD-Displays zur Anzeige der Zeichen verwendet. Weiterhin können bereits vorhandene Geräte mit vergleichsweise geringem Aufwand mit der Erfindung ausgestattet werden.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

Diese Patentanmeldung beansprucht die Priorität der deutschen Patentanmeldung 102004055085.9-11, deren Offenbarungsgehalt hiermit durch Rückbezug aufgenommen wird.

## Patentansprüche

1. Eingabevorrichtung mit einem ersten Zeichen einer ersten Farbe, einem zweiten Zeichen einer zweiten Farbe und einer Beleuchtungsvorrichtung, die Licht der ersten Farbe und/oder der zweiten Farbe erzeugt, derart, dass je nach Beleuchtung der Eingabevorrichtung in einem ersten Betriebszustand nur das erste Zeichen der ersten Farbe und in einem zweiten Betriebszustand nur das zweite Zeichen der zweiten Farbe hervortritt.

2. Eingabevorrichtung nach Anspruch 1, wobei
die Eingabevorrichtung eine Tastatur ist, und wobei mindestens eine Taste der Tastatur das erste und das zweite Zeichen aufweist.

3. Eingabevorrichtung nach Anspruch 2, wobei
die Taste in einem dritten Betriebszustand mit Licht, das die erste und die zweite Farbe enthält, vorzugsweise mit weißem Licht, beleuchtet ist, so dass beide Zeichen hervortreten.

4. Eingabevorrichtung nach einem der Ansprüche 2 oder 3, wobei
die Taste einen Tastenkörper aus einem für Licht der ersten und zweiten Farbe durchlässigen Material aufweist und mit einem ersten Zeichen der ersten Farbe und mit einem zweiten Zeichen der zweiten Farbe versehen ist.

5. Eingabevorrichtung nach Anspruch 4, wobei
im ersten Betriebszustand das erste Zeichen erkennbar ist, wenn die Taste mit Licht der zweiten Farbe beleuchtet ist.

6. Eingabevorrichtung nach einem der Ansprüche 2 bis 4, wobei im zweiten Betriebszustand das zweite Zeichen erkennbar ist, wenn die Taste mit Licht der ersten Farbe beleuchtet ist.

7. Eingabevorrichtung nach einem der Ansprüche 2 oder 3, wobei
die Taste bis auf die Zeichen ein für Licht der ersten und zweiten Farbe undurchlässiges Material enthält und mit einem für Licht der ersten Farbe durchlässigen ersten Zeichen und einem für Licht der zweiten Farbe durchlässigen zweiten Zeichen versehen ist.

8. Eingabevorrichtung nach Anspruch 7, wobei
im ersten Betriebszustand das erste Zeichen erkennbar ist, wenn die Taste mit Licht der ersten Farbe beleuchtet ist.

9. Eingabevorrichtung nach Anspruch 7, wobei
im zweiten Betriebszustand das zweite Zeichen erkennbar ist, wenn die Taste mit Licht der zweiten Farbe beleuchtet ist.

10. Eingabevorrichtung nach einem der vorhergehenden Ansprüche, wobei
mindestens ein Zeichen vorzugsweise ein alphanumerisches Symbol oder eine alphanumerische Symbolfolge ist.

11. Eingabevorrichtung nach einem der vorhergehenden Ansprüche, wobei
das erste Zeichen eine Ziffer und das zweite Zeichen ein Buchstabe ist.

12. Eingabevorrichtung nach einem der vorhergehenden Ansprüche, wobei
die Beleuchtungsvorrichtung mindestens ein strahlungsemittierendes Halbleiterbauelement aufweist.

13. Eingabevorrichtung nach Anspruch 12, wobei
das strahlungsemittierende Halbleiterbauelement eine Mehrzahl von Halbleiterchips umfasst.

14. Eingabevorrichtung nach einem der Ansprüche 2 bis 13, wobei
das Licht aus der Beleuchtungsvorrichtung in die Taste lateral eingekoppelt wird.

15. Eingabevorrichtung nach einem der Ansprüche 2 bis 13, wobei
das Licht aus der Beleuchtungsvorrichtung in die Taste vertikal eingekoppelt wird.

16. Eingabevorrichtung nach einem der Ansprüche 2 bis 15, wobei
für die Tasten eine gemeinsame Beleuchtungsvorrichtung vorgesehen ist.

17. Eingabevorrichtung nach Anspruch 16, wobei
die Tasten mithilfe eines Lichtleiters beleuchtet werden.

18. Eingabevorrichtung nach einem der vorhergehenden Ansprüche, wobei
die Eingabevorrichtung für ein mobiles elektronisches Gerät, beispielsweise ein Mobiltelefon, ein Notebook, ein PDA oder einen MP3-Player vorgesehen ist.

19. Eingabevorrichtung nach einem der vorhergehenden Ansprüche, wobei
die Farbe der Beleuchtung manuell einstellbar ist.

20. Eingabevorrichtung nach einem der vorhergehenden Ansprüche, wobei
die Farbe der Beleuchtung automatisch eingestellt wird.
